# EUROPÄISCHE PATENTSCHRIFT

(11) **EP 0 822 129 B1**
(45) Veröffentlichungstag und Bekanntmachung des Hinweises auf die Patenterteilung: **17.01.2001**
(21) Anmeldenummer: 97111354.3
(22) Anmeldetag: 04.07.1997
(51) Int. Cl.: B60T 7/12

(54) **Verfahren zum Anfahren eines Fahrzeugs**
Method for starting of a vehicle
Procédé pour démarrer un véhicule

(30) Priorität: 31.07.1996 DE 19630870
(43) Veröffentlichungstag der Anmeldung: 04.02.1998
(73) Patentinhaber: Bayerische Motoren Werke Aktiengesellschaft, 80788 München (DE)
(72) Erfinder: Siepker, Achim, 80804 München (DE)

(56) Entgegenhaltungen:
- EP-A- 0 523 338
- DE-A- 3 618 532
- DE-A- 4 027 793
- DE-A- 4 236 240
- DE-A- 4 421 088
- DE-A- 19 525 552

## Beschreibung

Die Erfindung betrifft ein Verfahren zur Unterstützung eines Anfahrvorganges bei einem Fahrzeug.

Es ist bekannt, daß insbesondere beim Anfahren am Berg Probleme auftreten können. Beispielsweise muß der Fahrzeugbediener die Fußbetriebsbremse lösen, um das Gaspedal betätigen zu können und so ein für den Anfahrvorgang notwendiges Motormoment zur Verfügung stellen zu können. Dies ist nicht immer unproblematisch. Der Einsatz der mechanischen Feststellbremse ermöglicht nur geübten und geschickten Fahrzeugbedienern ein problemloses Anfahren. Der Anfahrvorgang wird umso schwieriger, je steiler die Steigung ist.

Gerade beim Anfahren am Berg kommt es daher häufig zum Rückrollen eines Fahrzeugs und damit zur Gefährdung der übrigen Verkehrsteilnehmer.

Aus der DE 36 18 532 A1 ist eine Anfahrhilfe für ein Fahrzeug an einer Steigung bekannt. Die Anfahrhilfe umfaßt ein Bremsdruck-Halteventil zum Halten des Bremsdruckes und Freigeben desselben in Abhängigkeit vom Zustand des an einer Steigung haltenden Fahrzeugs. Die Aufhebung des Bremsbetätigungsdruckes erfolgt dann, wenn das tatsächlich verfügbare Anfahr-Drehmoment einen vorbestimmten Wert erreicht.

Ein aktiver Bremsdruckaufbau mittels Bremskraft ist aus der DE 36 18 532 A1 nicht bekannt.

In der DE 40 27 793 A1 ist eine Anordnung zum Halten eines Fahrzeugs auf einer geneigten Fahrbahn beschrieben. Auf Sperren umschaltbare Mehrwegventile dienen als Halteventil. Elektronische Schaltkreise steuern in der Lösestellung des Bremsdruckgebers in Abhängigkeit von Haltebefehlen oder Haltesignalen die Halteventile an und/oder schalten eine Hydraulikpumpe einer Hilfsdruckquelle ein.

Aus der DE 40 27 793 A1 ist es jedoch nicht bekannt, das Fahrzeug mittels eines aktiven Bremsdruckaufbaus anzuhalten, wenn die vom Fahrer ausgeübte Bremskraft nicht ausreicht.

In der DE 29 11 372 ist eine Bremsvorrichtung gegen unbeabsichtigtes Anrollen eines Fahrzeuges beschrieben. Beim Rückrollen eines Fahrzeugs wird eine vorher gelöste Handbremse wieder aktiviert, wozu auch die Betriebsbremse oder ein ABS-System verwendet werden können. Durch die dadurch einsetzende Bremsung wird ein weiteres Rückrollen des Fahrzeugs verhindert.

Aufgabe der Erfindung ist es, ein weiteres Verfahren zur Unterstützung eines Anfahrvorganges bei einem Fahrzeug zur Verfügung zu stellen, welches dem Bediener auf einfache, unkomplizierte und wirkungsvolle Weise sowie in jeder Fahrsituation ein problemloses Anfahren ermöglicht.

Diese Aufgabe wird durch die im Anspruch 1 genannten Merkmale gelöst.

Bei modernen Fahrzeugen ist in zunehmendem Maße die Betätigung der Radbremsen nicht nur über die durch das Bremspedal zu betätigende Betriebsbremse sondern auch über weitere, sog. sekundäre Bremskreise möglich. Gerade bei extremen Fahrsituationen ist es beispielsweise notwendig, die Fahrzeuginsassen und andere Verkehrsteilnehmer durch einen über die Fahrzeugbetriebsbedingungen kontrollierten Bremseingriff mittels Fremdkraft zu schützen. Dies erfolgt bei der bekannten Antischlupfregelung oder auch bei einer Fahrzeug-Stabilitätskontrolle durch Bremsbetätigung mittels Fremdkraft. Zu diesem Zweck werden die Fahrzeugbremsen vom Hauptbremszylinder abgekoppelt und über eine Pumpe mit Bremsdruck beaufschlagt. Diese Beaufschlagung kann unabhängig von der Stellung des Bremspedals sein. Zur Erzeugung des notwendigen Bremsdruckes an den einzelnen Rädern mittels Fremdkraft wird also nicht die Fußkraft des Fahrzeugbedieners, sondern die vorgenannt erwähnte Pumpe verwendet. Es handelt sich somit um einen Bremseingriff über Fremdkraft, wobei eine Überlagerung von Fußkraft und Fremdkraft durchaus stattfinden kann.

Die Möglichkeit, die Bremsbetätigung mittels Fremdkraft zu steuern, macht sich die vorliegende Erfindung zunutze. In einem ersten Schritt des erfindungsgemäßen Verfahrens erfolgt ein Bremseingriff mittels Fremdkraft und Fremdkraftmittel (Ventile), wodurch der Ruhezustand des Fahrzeugs sichergestellt werden kann. Dazu wird der erforderliche Bremsdruck entweder von der Einrichtung zur Erzeugung einer Fremdkraft aufgebaut und dann mittels Ventilen gehalten oder - wenn vom Fahrzeugbediener der notwendige Bremsdruck bereits durch Betätigen des Bremspedals zur Verfügung gestellt wurde - mittels Ventilen eingesperrt. Somit kann der Stillstand des Fahrzeugs auch bei Nichtbetätigung des Bremspedals gewährleistet werden. Fortlaufend wird dann die vom Antriebsmotor des Fahrzeugs erzeugte Kraft bzw. das entsprechende Motormoment erfaßt. Übersteigt dieses Motormoment einen bestimmten, vorgegebenen Grenzwert, so wird der mittels Fremdkraft fortgesetzt erzeugte Bremseingriff beendet. Das vom Motor erzeugte Motordrehmoment übersteigt dann den vorgegebenen Grenzwert, wenn der Fahrzeugbediener das Gaspedal über einen bestimmten Punkt hinaus betätigt. Durch die Betätigung des Gaspedals wird beim erfindungsgemäßen Verfahren somit ein gewollter Anfahrvorgang erkannt und gleichzeitig ist ein bestimmtes Motordrehmoment bereitgestellt, so dass beispielsweise beim Anfahrvorgang am Berg ein Rückrollen verhindert werden kann.

Da das Fahrzeug bei Beginn eines Bremseingriffs möglicherweise noch nicht ganz in seiner Ruhestellung angelangt ist, erfolgt der Druckaufbau zu Beginn des Bremseingriffs langsam, und zwar zumindest von der Fahrzeuggeschwindigkeit und der Zeit abhängig. Damit wird ein ruckartiger Stop verhindert und ein sanftes Anhatten bis zum vollständigen Stillstand des Fahrzeuges gewährleistet.

Eine erfindungsgemäße Ausführungsform ist dadurch gekennzeichnet, daß der Bremseingriff durch die Fremdkraft erst bei vorbestimmten Bedingungen erfolgt. Solche Betriebsbedingungen können beispielsweise die Fahrzeuggeschwindigkeit, ein Kupplungsschalter, ein Motorbetriebssignal und/oder ein sonstiger Aktivierungsschalter sein.

Eine besonders vorteilhafte Ausführungsform der Erfindung ist dadurch gekennzeichnet, daß der Grenzwert, ab welchem der Bremseingriff mittels Fremdkraft beendet wird, derjenigen Kraft entspricht, die minimal notwendig ist, um den Stillstand des Fahrzeugs zu gewährleisten. Eine Möglichkeit zur Ermittlung eines solchen Referenzwertes besteht darin, den Bremsdruck zu berücksichtigen, welcher in dem Zeitpunkt vorhanden ist, in dem die Fahrzeuggeschwindigkeit gerade zu Null geworden ist. Natürlich können auch fahrzeugspezifische oder umgebungsspezifische Parameter bei der Ermittlung eines solchen Referenzwertes berücksichtigt werden. Solche Daten sind beispielsweise die Getriebeübersetzung oder die Auslegung für den ersten Gang oder evtl. das Einlegen des Rückwärtsganges. Bezüglich umgebungsspezifischer Parameter kommt beispielsweise die Fahrzeugneigung (Steigung, Gefälle) in Betracht, welche beispielsweise aus der Diebstahlwarnanlage oder der Auswertung des Tankfüllstandes ermittelt werden kann.

Um einen sanften Anfahrvorgang zu gewährleisten wird vorzugsweise bei Beendigung des Bremseingriffs der Bremsdruck entsprechend einem vorbestimmten Verlauf gleichmäßig abgebaut. Dabei ist es vorteilhaft, zwischen einer Bergauf-Anfahrt und einer Bergab-Anfahrt zu unterscheiden, da abhängig davon ein schnelles bzw. langsames Lösen der Bremse notwendig sein kann. Dazu wird vorzugsweise auch die Stellung des Gangwählhebels sowie die Information über die Neigung (evtl. direkt als Neigungswinkelsensor der der Diebstahlwarnanlage oder der Auswertung einer Tankfüllstandsanzeige) genutzt.

Eine vorteilhafte Ausführungsform ist weiter dadurch gekennzeichnet, daß eine Temperaturkompensation bei einer Bremsscheibenabkühlung erfolgt. Dazu kann beispielsweise eine entsprechende Vorspannung bei der Bremsbetätigung vorgegeben werden. Die höhere Vorspannung wird bei der Lösefunktion durch Voreilen des Lösevorgangs berücksichtigt. Die Temperaturkompensation kann aber auch über einen Nachspannvorgang unter Berücksichtigung der Raddrehzahlen oder ein separates Temperaturmodell, welches die Temperatur ermittelt und angibt, berücksichtigt bzw. kompensiert werden.

Die vorliegende Erfindung wird, auch hinsichtlich weiterer Merkmale und Vorteile, anhand der einzigen beiliegenden Zeichnung näher erläutert.

Voraussetzung für das erfindungsgemäße Verfahren ist die Möglichkeit eines Bremseingriffes mittels Fremdkraft, wie es beispielsweise bei der Existenz einer Antischlupfregelung oder einer Stabilitätsregelung bei einem Fahrzeug der Fall ist. Damit sind Druckhalteventile und ein separates Pumpenaggregat oder ein regelbarer Bremskraftverstärker vorhanden. Für das nachfolgend beschriebene Ausführungsbeispiel muß ferner die Fahrzeuggeschwindigkeit feststellbar sein; es muß ein Kupplungsschalter vorgesehen sein und ein Erfassungsmittel, mit dem der Betrieb des Motors überprüft werden kann. Ferner ist beim nachfolgend beschriebenen Ausführungsbeispiel ein Aktivierungsschalter vorgesehen, mit dem die Funktion "Anfahrhilfe" aktiviert werden kann.

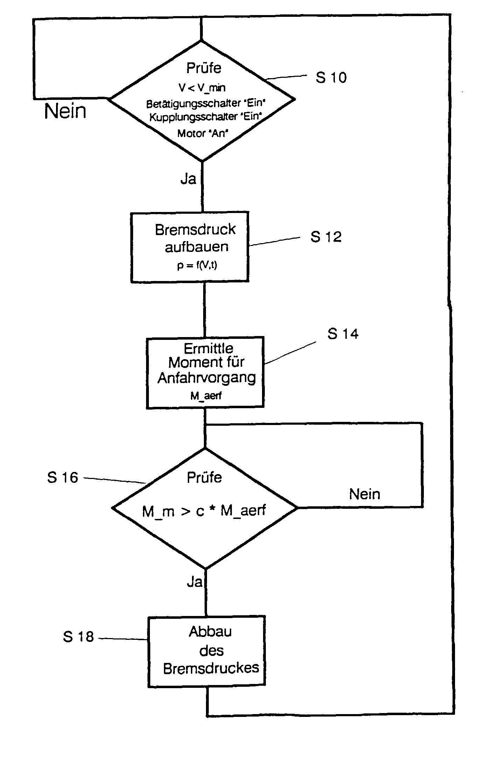

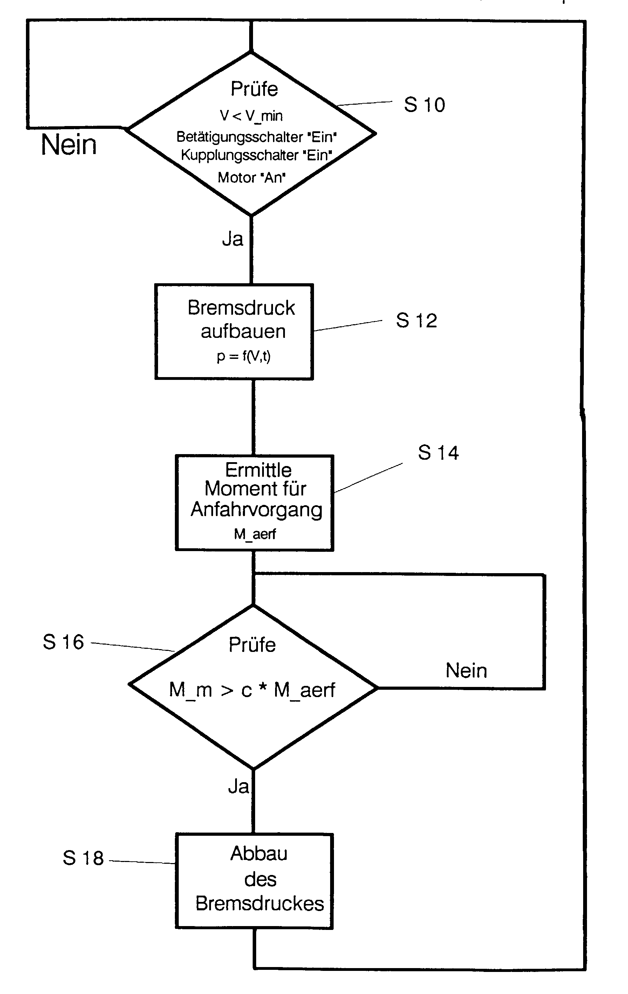

Gemäß Schritt 10 der einzigen Zeichnung wird geprüft, ob die Fahrzeuggeschwindigkeit V kleiner ist als eine vorgegebene Minimalgeschwindigkeit V_min. Ferner wird überprüft, ob der Kupplungsschalter betätigt ("ein") und der Motor in Betrieb ("an") ist. Schließlich wird überprüft, ob der separat vorgesehene Aktivierungsschalter bzw. Betätigungsschalter auf "ein" gestellt wurde. Mit dem Betätigungsschalter kann die Anfahrhilfe separat zugeschaltet werden. Es ist aber auch möglich, auf einen solchen Aktivierungs- bzw. Betätigungsschalter zu verzichten. Beispielsweise könnte bei einem entsprechenden manuellen Druckaufbau durch den Fahrzeugbediener und den vorgenannten weiteren Bedingungen der Bremsdruck zur Unterstützung des Anfahrvorgangs automatisch eingesperrt werden.

Ist auch nur eine der zu überprüfenden Bedingungen im Schritt 10 nicht eingehalten, so wird die Prüfung erneut durchgeführt. Sind dagegen alle Bedingungen erfüllt, so bedeutet dies, daß das Programm "Anfahrhilfe" gestartet wird, und es wird zu Schritt 12 verzweigt.

In Schritt 12 wird der Bremseingriff über die Fremdkraft durchgeführt. Liegt bereits ein ausreichender, vom Fahrzeugbediener manuell erzeugter Bremsdruck vor, so braucht dieser nur eingesperrt zu werden. Im ersten Fall werden die Bremsen vom Hauptzylinder abgekoppelt und eine Pumpe erzeugt in einem Sekundär-Bremskreis - der nunmehr mit den Fahrzeugbremsen verbunden ist - einen entsprechenden Bremsdruck p. Der Bremsdruck p wird nicht sofort in vollem Umfange sondern stetig aufgebaut, um einen abrupten Ruck zu verhindern. Gemäß der Angabe in Schritt 12 kann der Bremsdruck beispielsweise eine Funktion der Fahrzeuggeschwindigkeit und der Zeit sein, also p = f (V, t).

Anschließend wird in Schritt 14 das Moment ermittelt, welches für den Anfahrvorgang vom Antriebsmotor zur Verfügung gestellt werden soll. Dazu merkt man sich einen Bremsdruck p_Vor, der dem Bremsdruck p_0 zum Zeitpunkt t = 0 entspricht, wenn die Geschwindigkeit gerade zu V = 0 km/h geworden ist. Auch die Neigung des Fahrzeugs kann bei der Ermittlung des Anfahrmoments berücksichtigt werden. Aus p_0 läßt sich auf eine minimal notwendige Bremskraft schließen, die notwendig ist, um das Fahrzeug beispielsweise gegenüber einer Hangabtriebskraft zu erhalten. Aus diesem Bremsdruck p_Vor kann man über eine Funktion, in die fahrzeugspezifischen Daten wie die Getriebeübersetzung, die Auslegung für den ersten Gang etc. bzw. umgebungsspezifische Daten eingehen, ein minimal erforderliches Antriebsmoment M_aerf ermitteln, welches für den Anfahrvorgang notwendig ist.

In Schritt 16 wird geprüft, ob das vom Motor erzeugte Motormoment M_m größer ist als das minimal erforderliche Antriebsmoment M_aerf, multipliziert mit einem Sicherheitsfaktor c. Dieser Sicherheitsfaktor kann komfortbeeinflussend sein, aber auch fahrzeugspezifische Parameter berücksichtigen.

Erreicht das vom Motor erzeugte Drehmoment den durch den Sicherheitsfaktor und das minimal erforderliche Antriebsmoment M_aerf definierten Grenzwert nicht, so wird die Prüfung weiter durchgeführt.

Überschreitet das Motordrehmoment den vorgenannten Grenzwert, so wird zu Schritt 18 verzweigt, in welchem der Bremsdruck entsprechend einem festgelegten Verlauf abgebaut wird.

Da das Motormoment dabei das minimal erforderliche Antriebsmoment für den Anfahrvorgang übersteigt, ist am Berg ein Rückrollen nicht zu befürchten.

Problematisch kann eine Bremsscheibenabkühlung sein, so daß eine Temperaturkompensation notwendig ist, um der Gefahr eines Abrollens durch Spannkraftverlust vorzubeugen. Dazu wird bei der Ermittlung des Bremsdruckes eine entsprechende Vorspannung eingeführt. Diese höhere Vorspannung wird bei der Lösefunktion, also beim Beenden des Bremseingriffs, durch Voreilung des Lösevorgangs berücksichtigt. Die Temperaturkompensation kann aber auch durch Überwachen der Raddrehzahl oder Simulation in einem Temperaturmodell überwacht bzw. kompensiert werden.

Das erfindungsgemäße Verfahren stellt eine äußerst einfache und wirkungsvolle Maßnahme dar, ein problemloses Anfahren, insbesondere am Berg zu gewährleisten. Außer einem möglichen Betätigungselement für die Zuschaltung der Anfahrhilfefunktion werden keine zusätzlichen Hardware-Komponenten benötigt.

## Patentansprüche

1. Verfahren zur Unterstützung eines Anfahrvorganges bei einem Fahrzeug, mit den Schritten:
- Sicherstellen des Ruhezustandes des Fahrzeuges durch Bremseingriff über Fremdkraft und Fremdkraftmittel,
- Erfassen eines vom Antriebsmotor des Fahrzeugs erzeugten Motormoments und
- Beenden des Bremseingriffs, wenn das Motormoment einen Grenzwert überschreitet,
dadurch gekennzeichnet,
daß der erforderliche Bremsdruck zum Stoppen und Halten des Fahrzeugs dann mittels der Fremdkraft oder Fremdkraftmittel aufgebaut wird, wenn die vom Fahrzeugbediener ausgeübte Bremskraft nicht ausreicht, wobei der Bremsdruckaufbau zu Beginn des Bremseingriff zumindest in Abhängigkeit von der Fahrzeuggeschwindigkeit und der Zeit erfolgt.

2. Verfahren nach Anspruch 1,
dadurch gekennzeichnet, daß der Bremseingriff bei vorbestimmten Fahrzeugbetriebs- und Zustandsbedingungen erfolgt.

3. Verfahren nach Anspruch 2,
dadurch gekennzeichnet, daß als Bedingungen die Fahrzeuggeschwindigkeit und/oder ein Kupplungsschalter und/oder ein Motorbetriebssignal und/oder ein Aktivierungsschalter berücksichtigt werden.

4. Verfahren nach einem der Ansprüche 1 bis 3,
dadurch gekennzeichnet, daß ein Referenzwert für die minimal notwendige Bremskraft beim Bremseingriff ermittelt wird, der als Grundlage zur Festlegung des Grenzwertes dient, ab welcher der Bremseingriff über Fremdkraft wieder beendet wird.

5. Verfahren nach Anspruch 4,
dadurch gekennzeichnet, daß zur Ermittlung des Referenzwertes der Bremsdruck zu dem Zeitpunkt berücksichtigt wird, in dem die Fahrzeuggeschwindigkeit gerade null geworden ist.

6. Verfahren nach Anspruch 4 oder 5,
dadurch gekennzeichnet, daß zur Ermittlung des Referenzwertes der Neigungswinkel des Fahrzeugs berücksichtigt wird.

7. Verfahren nach einem der Ansprüche 4 bis 6,
dadurch gekennzeichnet, daß bei der Referenzwertermittlung fahrzeugspezifische Parameter berücksichtigt werden.

8. Verfahren nach einem der vorhergehenden Ansprüche,
dadurch gekennzeichnet, daß bei Beendigung des Bremseingriffs der Bremsdruck entsprechend einem vorbestimmten Verlauf abgebaut wird.

9. Verfahren nach einem der vorhergehenden Ansprüche,
dadurch gekennzeichnet, daß die Temperatur der Bremsscheiben beim Bremseingriff und/oder Bremslösevorgang berücksichtigt wird.

10. Verfahren nach Anspruch 9,
dadurch gekennzeichnet, daß ein möglicher Spannkraftverlust bei einer Bremsabkühlung durch eine Vorspannung berücksichtigt wird, welche bei Beendigung des Bremseingriffs durch Voreilung kompensiert wird.

11. Verfahren nach einem der vorhergehenden Ansprüche,
dadurch gekennzeichnet, daß ein Sicherstellen des Ruhezustandes des Fahrzeugs durch Bremseingriff über Fremdkraft oder Fremdkraftmittel dann erfolgt, wenn das Fahrzeug mit betätigter Feststellbremse abgestellt wurde und der Motor oder die Zündung eingeschaltet werden.

12. Verfahren nach einem der vorhergehenden Ansprüche,
dadurch gekennzeichnet, daß die Funktion zur Unterstützung eines Anfahrvorganges angezeigt wird.

## Claims

1. A method for supporting a starting off process in a vehicle, with the stages:
- assuring the standstill of the vehicle by brake application via external force and external means of force,
- monitoring a motor torque generated by the drive motor of the vehicle and
- ending the brake application, when the motor torque exceeds a threshold value,
characterised in that,
the brake pressure required to stop and hold the vehicle using external force or external means of force is built up, when the braking force exerted by the vehicle user is not sufficient, whereby the build up of brake pressure at the start of the brake application is effected at least in dependency on the vehicle speed and time.

2. A method according to Claim 1,
characterised in that the brake application is effected under predetermined vehicle operating and status conditions.

3. A method according to Claim 2,
characterised in that as conditions the vehicle speed and/or a clutch switch and/or a motor operation signal and/or an activating switch are considered.

4. A method according to one of the Claims 1 to 3,
characterised in that a reference value for the minimum necessary braking power on brake application is calculated, which serves as the foundation for establishing the threshold value, from which the brake application via external force is again ended.

5. A method according to Claim 4,
characterised in that the brake pressure at the time, at which the vehicle speed has precisely reached zero is taken into consideration for the calculation of the reference value.

6. A method according to Claim 4 or Claim 5,
characterised in that the inclination of the vehicle is taken into consideration in the calculation of the reference value.

7. A method according to one of the Claims 4 to 6,
characterised in that vehicle-specific parameters are taken into account in the reference value calculation.

8. A method according to one of the foregoing Claims,
characterised in that in the ending of the brake application, the brake pressure is reduced in accordance with a predetermined curve.

9. A method according to one of the foregoing Claims,
characterised in that in the temperature of the brake discs is taken into account at the brake application and/or the brake release process.

10. A method according to Claim 9,
characterised in that in a possible loss of tension with a brake cooling is taken into account by pre-tensioning, which is compensated for at the ending of the brake application by advancing.

11. A method according to one of the foregoing Claims,
characterised in that an assurance of the standstill of the vehicle by the application of braking by external force or external means of force is effected when the vehicle has been switched off with the handbrake applied and the motor or the ignition is switched on.

12. A method according to one of the foregoing Claims,
characterised in that in the function of supporting a starting off process is indicated.

## Revendications

1. Procédé d'assistance au démarrage d'un véhicule selon lequel :
• on assure l'immobilisation du véhicule par une action de freinage par une force extérieure et par un moyen exerçant la force extérieure,
• on détecte le couple moteur fourni par le moteur du véhicule,
• on termine l'action de freinage lorsque le couple moteur dépasse une valeur limite,
caractérisé en ce qu'
• on établit la pression de freinage nécessaire à l'arrêt et à l'immobilisation du véhicule à l'aide de la force extérieure ou d'un moyen exerçant la force extérieure, si la force de freinage exercée par le conducteur n'est pas suffisante,
• on établit la pression de freinage au début de l'action de freinage, au moins en fonction de la vitesse du véhicule et du temps.

2. Procédé selon la revendication 1,
caractérisé en ce que
l'action de freinage est faite dans certaines conditions prédéterminées de fonctionnement et d'état du véhicule.

3. Procédé selon la revendication 2,
caractérisé en ce que
les conditions sont liées à la vitesse du véhicule et/ou à un commutateur d'embrayage et/ou à un signal de fonctionnement du moteur et/ou à un commutateur d'activation.

4. Procédé selon l'une des revendications 1 à 3,
caractérisé en ce qu'
on détermine une valeur de référence pour la force de freinage minimale nécessaire lors d'une action de freinage, cette force servant de base à la fixation de la valeur limite à partir de laquelle se termine de nouveau l'action de freinage par la force extérieure.

5. Procédé selon la revendication 4,
caractérisé en ce que
pour déterminer la valeur de référence on tient compte de la pression de freinage à l'instant auquel la vitesse du véhicule vient de s'annuler.

6. Procédé selon les revendications 4 ou 5
caractérisé en ce qu'
on tient compte de l'angle d'inclinaison du véhicule pour déterminer la valeur de référence.

7. Procédé selon l'une des revendications 4 à 6,
caractérisé en ce qu'
on tient compte des paramètres spécifiques du véhicule pour déterminer la valeur de référence.

8. Procédé selon l'une des revendications précédentes,
caractérisé en ce qu'
on diminue la pression de freinage selon une courbe prédéterminée à la fin de l'action de freinage.

9. Procédé selon l'une des revendications précédentes,
caractérisé en ce qu'
on tient compte de la température des disques de frein lors de l'action de freinage et/ou de l'opération de libération des freins.

10. Procédé selon la revendication 9,
caractérisé en ce qu'
on tient compte d'une éventuelle perte de force de serrage par refroidissement des freins en appliquant une précontrainte qui est compensée à la fin de l'action de freinage par une action anticipée.

11. Procédé selon l'une des revendications précédentes,
caractérisé en ce qu'
on assure l'immobilisation du véhicule par l'action de freinage par une force extérieure ou par un moyen exerçant une force extérieure, si le véhicule a été arrêté avec un frein de blocage actionné et si le moteur ou l'allumage ont été mis en route.

12. Procédé selon l'une des revendications précédentes,
caractérisé en ce qu'
on affiche la mise en oeuvre de la fonction d'assistance au démarrage.
